(19) Europäisches Patentamt / European Patent Office / Office européen des brevets

(11) **EP 2 043 243 A1**

(12) **EUROPÄISCHE PATENTANMELDUNG**

(43) Veröffentlichungstag:
**01.04.2009 Patentblatt 2009/14**

(51) Int Cl.:
***H02M 3/07*** *(2006.01)*

(21) Anmeldenummer: **07117325.6**

(22) Anmeldetag: **27.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **ABB Schweiz AG**
**5400 Baden (CH)**

(72) Erfinder:
• **Suh, Yongsug**
  **5417 Untersiggenthal (CH)**

• **Steimer, Peter**
  **5420 Ehrendingen (CH)**
• **Keiser, Oliver**
  **6010 Kriens (CH)**

(74) Vertreter: **ABB Patent Attorneys**
  **c/o ABB Schweiz AG,**
  **Intellectual Property (CH-LC/IP),**
  **Brown Boveri Strasse 6**
  **5400 Baden (CH)**

Bemerkungen:
Amended claims in accordance with Rule 137(2) EPC.

(54) **Umrichterschaltung sowie Verfahren zum Betrieb einer solchen Umrichterschaltung**

(57) Eine Umrichterschaltung, bei der kapazitive Energiespeicher (C,CA) mit Hilfe von Halbleiterschaltern (S0,S1,S2) umgeladen werden.
Zur Verlustminimierung werden zwei Induktivitäten (L1,L2), je eine am Eingang (L1) und am Ausgang (L2) eingeschaltet, die ein resonantes Laden und Entladen der Energiespeicher ermöglichen. Damit wird eine höhere Ladespannung im Vergleich zum nichtresonanten Laden erreicht.

Eine erste Ausführungsform enthält eine Schaltgruppe (2) mit einem Kondensator (C), zwei Dioden ($D_1,D_2$) und einem Schalter (S1,S2).
Weitere Ausführungsformen enthalten mehrere solcher Schaltgruppen (2) kaskadenartig hintereinandergeschaltet.

Fig. 2

EP 2 043 243 A1

**Beschreibung**

**Technisches Gebiet**

Die Erfindung bezieht sich auf das Gebiet der leistungselektronischen Schaltungen. Sie geht aus von einer Umrichterschaltung sowie einem Verfahren zu deren Betrieb gemäss den Oberbegriffen der unabhängigen Ansprüche.

**Stand der Technik**

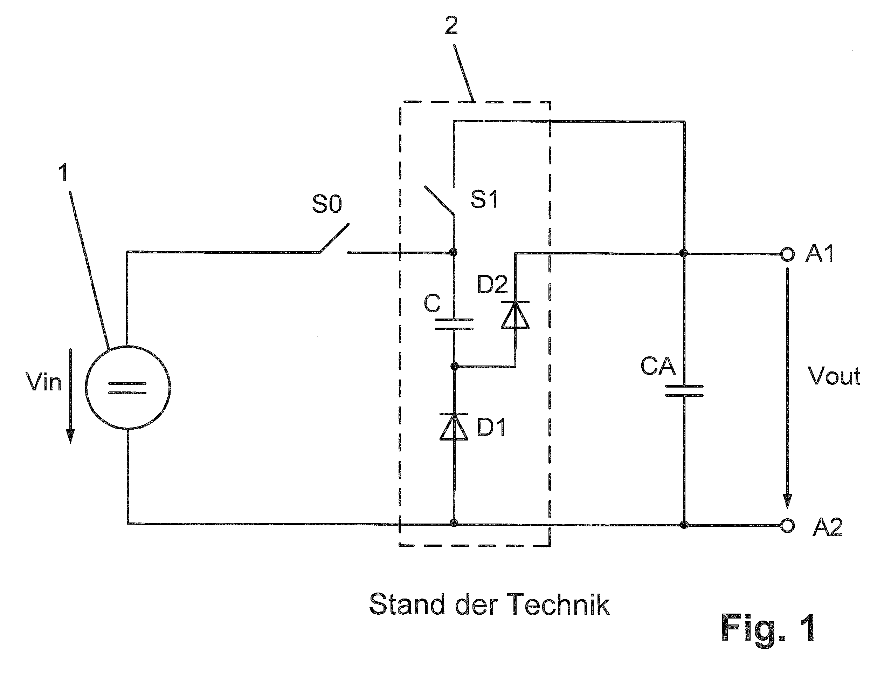

Umrichterschaltungen werden heute in einer Fülle von leistungselektronischen Anwendungen eingesetzt. Der Einsatz einer Umrichterschaltung ist beispielsweise als Gleichspannungssteller, insbesondere Tiefsetzsteller, denkbar. Eine derartige übliche Umrichterschaltung, insbesondere ein Gleichspannungssteller, ist beispielsweise in Fig. 1 gemäss "A new approach to reducing output ripple in switched -capacitor-based Stepp-down DC-DC-converters", IEEE Transactions on Power Electronics, Vol 21, No.6, November 2006 gezeigt. Nach Fig. 1 weist die Umrichterschaltung eine Gleichspannungsquelle und einen mit der Gleichspannungsquelle verbundenen ersten Schalter auf. Weiterhin umfasst die Umrichterschaltung eine Schaltgruppe, welche Schaltgruppe einen zweiten Schalter, einen ersten kapazitiven Energiespeicher, einen ersten und einen zweiten unidirektionalen nicht-ansteuerbaren Leistungshalbleiterschalter aufweist, wobei der zweite Schalter mit dem ersten kapazitiven Energiespeicher verbunden ist, der erste kapazitive Energiespeicher mit dem ersten unidirektionalen nicht-ansteuerbaren Leistungshalbleiterschalter verbunden ist und der zweite unidirektionale nicht-ansteuerbare Leistungshalbleiterschalter mit dem Verbindungspunkt des ersten kapazitiven Energiespeichers mit dem ersten unidirektionalen nicht-ansteuerbaren Leistungshalbleiterschalter verbunden ist. Ferner umfasst die Umrichterschaltung gemäss Fig. 1 einen zweiten kapazitiven Energiespeicher, welcher zweite kapazitive Energiespeicher mit dem zweiten Schalter der Schaltgruppe und mit dem zweiten unidirektionalen nicht-ansteuerbare Leistungshalbleiterschalter der Schaltgruppe zusammen verbunden sind. Der zweite kapazitive Energiespeicher ist zudem mit dem ersten unidirektionalen nicht-ansteuerbaren Leistungshalbleiterschalter der Schaltgruppe verbunden und die Gleichspannungsquelle ist mit dem Verbindungspunkt des zweiten kapazitiven Energiespeichers mit dem ersten unidirektionalen nicht-ansteuerbaren Leistungshalbleiterschalter der Schaltgruppe verbunden.

Wird nun der erste Schalter geschlossen und der zweite Schalter geöffnet, so wird der erste kapazitive Energiespeicher von der Gleichspannungsquelle geladen, wodurch aber beim Ladevorgang hohe Verluste entstehen. Das Laden eines kapazitiven Energiespeichers von 0 V auf den Spannungswert der Gleichspannungsquelle hat beispielsweise inhärent einen Wirkungsgrad von nur 50%. Beim Entladen des ersten kapazitiven Energiespeichers, d.h. wenn der erste Schalter geschlossen und der zweite Schalter geöffnet wird, entstehen ebenfalls hohe Verluste. Insgesamt sind die Verluste des Energietransfer zwischen den kapazitiven Energiespeichern für Anwendungen mit Ansprüchen an eine hohe Effizienz damit nicht akzeptabel.

**Darstellung der Erfindung**

Aufgabe der Erfindung ist es deshalb, eine Umrichterschaltung der eingangs genannten Art derart auszubilden und zu betreiben, dass möglichst keine Verluste auftreten.

Diese Aufgabe wird durch die Merkmale des Anspruchs 1 bzw. 2 bzw. 3 und verfahrensmässig durch Anspruch 6 bzw. 7 bzw. 8 gelöst.

In den abhängigen Ansprüchen sind vorteilhafte Weiterbildungen der Erfindung angegeben.

Die erfindungsgemässe Umrichterschaltung weist eine Gleichspannungsquelle und einen mit der Gleichspannungsquelle verbundenen ersten Schalter auf. Weiterhin umfasst die Umrichterschaltung eine Schaltgruppe, welche Schaltgruppe einen zweiten Schalter, einen ersten kapazitiven Energiespeicher, einen ersten und einen zweiten unidirektionalen nicht-ansteuerbaren Leistungshalbleiterschalter aufweist, wobei der zweite Schalter mit dem ersten kapazitiven Energiespeicher verbunden ist, der erste kapazitive Energiespeicher mit dem ersten unidirektionalen nicht-ansteuerbaren Leistungshalbleiterschalter verbunden ist und der zweite unidirektionale nicht-ansteuerbare Leistungshalbleiterschalter mit dem Verbindungspunkt des ersten kapazitiven Energiespeichers mit dem ersten unidirektionalen nicht-ansteuerbaren Leistungshalbleiterschalter verbunden ist. Ferner umfasst die Umrichterschaltung einen zweiten kapazitiven Energiespeicher, welcher zweite kapazitive Energiespeicher mit dem zweiten Schalter der Schaltgruppe und mit dem zweiten unidirektionalen nicht-ansteuerbare Leistungshalbleiterschalter der Schaltgruppe zusammen verbunden sind. Der zweite kapazitive Energiespeicher ist zudem mit dem ersten unidirektionalen nicht-ansteuerbaren Leistungshalbleiterschalter der Schaltgruppe verbunden und die Gleichspannungsquelle ist mit dem Verbindungspunkt des zweiten kapazitiven Energiespeichers mit dem ersten unidirektionalen nicht-ansteuerbaren Leistungshalbleiterschalter der Schaltgruppe verbunden. Erfindungsgemäss ist nun in die Verbindung der Gleichspannungsquelle mit dem ersten Schalter eine erste Induktivität seriell eingeschaltet. Darüber hinaus ist in die Verbindung des zweiten Schalters der Schaltgruppe mit dem Verbindungspunkt des zweiten kapazitiven Energiespeichers mit dem zweiten unidirektionalen nicht-ansteuerbare Leistungshalbleiterschalter der Schaltgruppe eine zweite Induktivität seriell eingeschaltet.

Wird nun durch Schliessen des ersten Schalters und Öffnen des zweiten Schalters der erste kapazitive Energiespeicher geladen, so entstehen vorteilhaft nahezu keine Verluste, da die erste Induktivität zusammen mit dem ersten kapazitiven Energiespeicher einen Schwingkreis mit resonantem Verhalten bildet. Zudem wird der erste kapazitive Energiespeicher auf den doppelten Spannungswert der Gleichspannungsquelle aufgeladen, so dass mit Vorteil eine verbesserte Ausnutzung des ersten kapazitiven Energiespeichers erreicht werden kann. Wird bei Öffnen des ersten Schalters und Schliessen des zweiten Schalters der erste kapazitive Energiespeicher entladen, so entstehen auch dann vorteilhaft nahezu keine Verluste, da die zweite Induktivität zusammen mit dem ersten und zweiten kapazitiven Energiespeicher einen Schwingkreis mit resonantem Verhalten bildet.

Nach der Erfindung wird bei dem Betrieb der Umrichterschaltung mit der einen Schaltgruppe verfahrensmässig zunächst für einen einstellbaren ersten Zeitraum der erste Schalter geschlossen und der zweite Schalter geöffnet, wodurch vorteilhaft sichergestellt werden kann, dass der erste kapazitive Energiespeicher ausreichend und ohne nennenswerte Verluste auf den doppelten Spannungswert der Gleichspannungsquelle geladen wird. Nach Ablauf des einstellbaren ersten Zeitraums wird dann für einen einstellbaren zweiten Zeitraum der erste Schalter geöffnet und der zweite Schalter geschlossen, wodurch der erste kapazitive Energiespeicher über die zweite Induktivität je nach Einstellung des zweiten Zeitraums auf ein gewisses Mass entladen wird und der zweite kapazitive Energiespeicher geladen wird. Nach Ablauf des zweiten Zeitraums werden dann die vorstehend genannten Schritte wiederholt. Insgesamt kann durch diesen Betrieb in sehr einfacher Weise erreicht werden, dass fast keine Verluste auftreten und eine an den zweiten kapazitiven Energiespeicher beispielsweise angeschlossene elektrische Last stets ausreichend mit elektrischer Energie und einem stabilen Spannungswert versorgt werden kann.

Als Alternative umfasst die erfindungsgemässe Umrichterschaltung die Schaltgruppe und zudem n weiteren Schaltgruppen, wobei n ≥ 1 ist und jede Schaltgruppe den zweiten Schalter, den ersten kapazitiven Energiespeicher, den ersten und zweiten unidirektionalen nicht-ansteuerbaren Leistungshalbleiterschalter aufweist, wobei der zweite Schalter mit dem ersten kapazitiven Energiespeicher verbunden ist, der erste kapazitive Energiespeicher mit dem ersten unidirektionalen nicht-ansteuerbaren Leistungshalbleiterschalter verbunden ist und der zweite unidirektionale nicht-ansteuerbare Leistungshalbleiterschalter mit dem Verbindungspunkt des ersten kapazitiven Energiespeichers mit dem ersten unidirektionalen nicht-ansteuerbaren Leistungshalbleiterschalter verbunden ist. Jede der n weiteren Schaltgruppen ist verkettet mit der jeweils benachbarten weiteren Schaltgruppe verbunden und die Schaltgruppe ist mit der ersten weiteren Schaltgruppe verkettet verbunden, wobei die ersten unidirektionalen nicht-ansteuerbaren Leistungshalbleiterschalter der Schaltgruppen miteinander verbunden sind. Die Umrichterschaltung umfasst desweiteren den zweiten kapazitiven Energiespeicher, welcher zweite kapazitive Energiespeicher mit dem zweiten Schalter der n-ten weiteren Schaltgruppe und mit dem zweiten unidirektionalen nicht-ansteuerbare Leistungshalbleiterschalter der n-ten weiteren Schaltgruppe zusammen verbunden sind und der zweite kapazitive Energiespeicher und die Gleichspannungsquelle mit dem Verbindungspunkt der ersten unidirektionalen nicht-ansteuerbaren Leistungshalbleiterschalter der Schaltgruppen verbunden ist. Nach der Erfindung ist auch bei dieser alternativen Umrichterschaltung in die Verbindung der Gleichspannungsquelle mit dem ersten Schalter die erste Induktivität seriell eingeschaltet. Zudem ist in die Verbindung des zweiten Schalters der n-ten weiteren Schaltgruppe mit dem Verbindungspunkt des zweiten kapazitiven Energiespeichers mit dem zweiten unidirektionalen nicht-ansteuerbare Leistungshalbleiterschalter der n-ten weiteren Schaltgruppe nun die zweite Induktivität seriell eingeschaltet oder in die Verbindung des zweiten kapazitiven Energiespeichers mit dem Verbindungspunkt des zweiten Schalters der n-ten weiteren Schaltgruppe mit dem zweiten unidirektionalen nicht-ansteuerbare Leistungshalbleiterschalter der n-ten weiteren Schaltgruppe die zweite Induktivität seriell eingeschaltet.

Durch Schliessen des ersten Schalters und Öffnen der zweiten Schalter aller Schaltgruppen wird der erste kapazitive Energiespeicher einer jeden Schaltgruppe geladen, wobei vorteilhaft nahezu keine Verluste entstehen, da die erste Induktivität zusammen mit den ersten kapazitiven Energiespeichern der Schaltgruppen einen Schwingkreis mit resonantem Verhalten bildet. Zudem werden die ersten kapazitiven Energiespeicher auf den doppelten Spannungswert der Gleichspannungsquelle aufgeladen, so dass mit Vorteil eine verbesserte Ausnutzung der ersten kapazitiven Energiespeicher erreicht werden kann. Wird bei Öffnen des ersten Schalters und Schliessen zumindest eines der zweiten Schalter der Schaltgruppen der zugehörige erste kapazitive Energiespeicher entladen, so entstehen auch dann vorteilhaft nahezu keine Verluste, da die zweite Induktivität zusammen mit dem ersten und zweiten kapazitiven Energiespeicher oder, im Falle mehrerer geschlossener zweiter Schalter, mit den entsprechenden ersten kapazitiven Energiespeichern und dem zweiten kapazitiven Energiespeicher einen Schwingkreis mit resonantem Verhalten bildet. Zudem lässt sich durch das flexible Schliessen mindestens eines zweiten Schalters der Schaltgruppen mit Vorteil die Spannung am zweiten kapazitiven Energiespeicher einstellen, an welchen zweiten kapazitiven Energiespeicher eine elektrische Last, insbesondere parallel, angeschlossen werden kann.

Nach der Erfindung wird bei dem Betrieb der Umrichterschaltung mit der einen Schaltgruppe und den n weiteren Schaltgruppen verfahrensmässig zunächst für einen einstellbaren ersten Zeitraum der erste Schalter geschlossen und die zweiten Schalter geöffnet, wodurch vorteilhaft sichergestellt werden kann, dass sämtliche erste kapazitive Energiespeicher der Schaltgruppen ausreichend und ohne nennenswerte Verluste auf den doppelten Spannungswert der Gleichspannungsquelle geladen werden. Nach Ablauf des einstellbaren ersten Zeitraums wird dann der erste Schalter geöffnet und geöffnet gehalten, wobei ebenfalls nach Ablauf des einstellbaren ersten Zeitraums mindestens einer der zweiten Schalter für einen einstellbaren zweiten Zeitraum geschlossen wird. Nach Ablauf des einstellbaren zweiten Zeitraums wird der zuvor geschlossene mindestens eine zweite Schalter geöffnet und geöffnet gehalten, wobei ebenfalls nach Ablauf des einstellbaren zweiten Zeitraums mindestens ein zuvor noch nicht geschlossener zweiter Schalter für den einstellbaren zweiten Zeitraums geschlossen wird. Nach Ablauf des einstellbaren zweiten Zeitraums wird der zuvor geschlossene mindestens einen zweiten Schalters geöffnet und geöffnet gehalten. Diese vorgenannten Schritte werden solange wiederholt, bis alle zweiten Schalter einmal geschlossen und wieder geöffnet wurden. Daraufhin werden dann sämtliche Schritte von Anfang an wieder wiederholt. Durch das Schliessen mindestens eines der zweiten Schalter wird der erste kapazitive Energiespeicher bzw. die ersten kapazitiven Energiespeicher über die zweite Induktivität je nach Einstellung des zweiten Zeitraums auf ein gewisses Mass entladen und der zweite kapazitive Energiespeicher geladen. Ferner lässt sich durch das vorstehend beschriebene flexible Schliessen mindestens eines zweiten Schalters der Schaltgruppen mit Vorteil die Spannung am zweiten kapazitiven Energiespeicher einstellen und damit eine beispielsweise an den zweiten kapazitiven Energiespeicher angeschlossene elektrische Last optimal versorgen.

Alternativ laufen bei dem Betrieb der Umrichterschaltung mit der einen Schaltgruppe und den n weiteren Schaltgruppen verfahrensmässig folgende Schritte ab:

(a) für einen einstellbaren ersten Zeitraum Schliessen des ersten Schalters und Schliessen einer Anzahl der zweiten Schaltern, wobei die Anzahl kleiner n ist, und Öffnen der nicht geschlossen zweiten Schalter,

(b) nach Ablauf des einstellbaren ersten Zeitraums Öffnen des ersten Schalters, geöffnet Halten des ersten Schalters, Öffnen der unter Schritt (a) geschlossenen zweiten Schalter und geöffnet Halten der unter Schritt (a) geschlossenen zweiten Schalter,

(c) nach Ablauf des einstellbaren ersten Zeitraums Schliessen mindestens eines der unter Schritt (a) geöffneten zweiten Schalter für einen einstellbaren zweiten Zeitraum,

(d) nach Ablauf des einstellbaren zweiten Zeitraums Öffnen des bei Schritt (c) geschlossenen mindestens einen zweiten Schalters und geöffnet halten des bei Schritt (c) geöffneten mindestens einen zweiten Schalters,

(e) nach Ablauf des einstellbaren zweiten Zeitraums Schliessen mindestens eines zuvor noch nicht geschlossenen zweiten Schalters für den einstellbaren zweiten Zeitraums,

(f) nach Ablauf des einstellbaren zweiten Zeitraums Öffnen des bei Schritt (e) geschlossenen mindestens einen zweiten Schalters und geöffnet halten des bei Schritt (e) geöffneten mindestens einen zweiten Schalters,

(g) Wiederholen des Schrittes (e) und (f) solange, bis alle zweiten Schalter einmal geschlossen und wieder geöffnet wurden,

(h) wiederholen der Schritte (a) bis (g).

Durch diese Alternative ist der Spannungswert am zweiten kapazitiven Energiespeicher mit Vorteil variable einstellbar, wodurch sich ebenfalls eine beispielsweise an den zweiten kapazitiven Energiespeicher angeschlossene elektrische Last optimal versorgen lässt.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1     eine Ausführungsform einer Umrichterschaltung nach dem Stand der Technik,

Fig. 2     eine erste Ausführungsform einer erfindungsgemässen Umrichterschaltung,

Fig. 3     eine zweite Ausführungsform der erfindungsgemässen Umrichterschaltung und

Fig. 4     eine dritte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

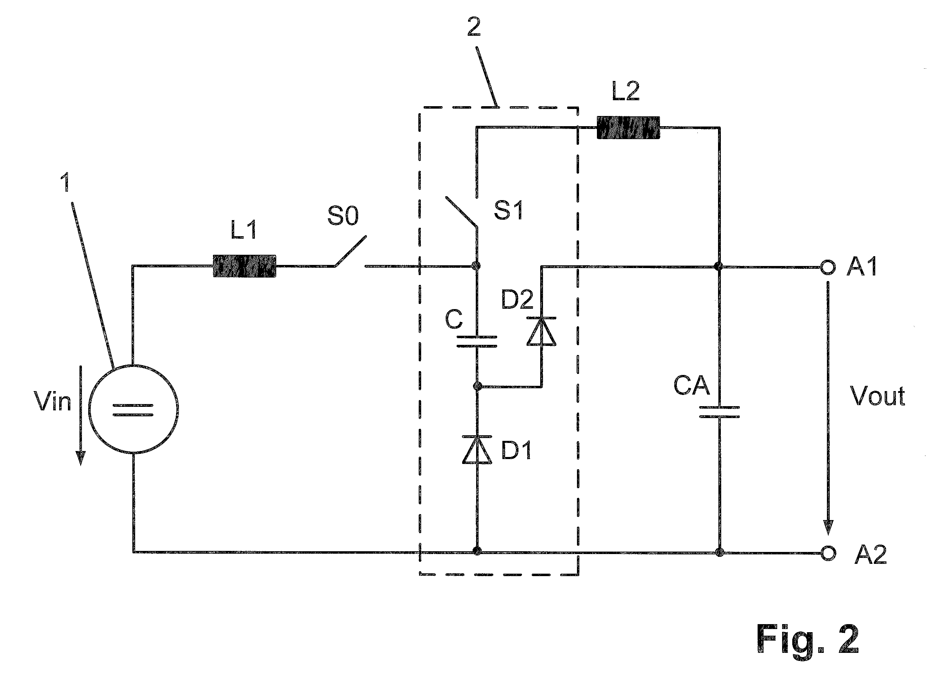

In Fig. 2 ist eine erste Ausführungsform einer erfindungsgemässen Umrichterschaltung dargestellt. Darin weist die Umrichterschaltung eine Gleichspannungsquelle 1 und einen mit der Gleichspannungsquelle 1 verbundenen ersten Schalter S0 auf. Weiterhin umfasst die Umrichterschaltung eine Schaltgruppe 2, welche Schaltgruppe 2 einen zweiten Schalter S1, einen ersten kapazitiven Energiespeicher C, einen ersten und einen zweiten unidirektionalen nicht-ansteuerbaren Leistungshalbleiterschalter D1, D2 aufweist. Vorzugsweise ist der erste und zweite unidirektionale nicht-ansteuerbare Leistungshalbleiterschalter D1, D2 als Diode ausgebildet. Gemäss Fig. 2 ist der zweite Schalter S1 mit dem ersten kapazitiven Energiespeicher C verbunden, der erste kapazitive Energiespeicher C mit dem ersten unidirektionalen nicht-ansteuerbaren Leistungshalbleiterschalter D1 verbunden und der zweite unidirektionale nicht-ansteuerbare Leistungshalbleiterschalter D2 mit dem Verbindungspunkt des ersten kapazitiven Energiespeichers C mit dem ersten unidirektionalen nicht-ansteuerbaren Leistungshalbleiterschalter D1 verbunden. Ferner umfasst die Umrichterschaltung einen zweiten kapazitiven Energiespeicher CA, welcher zweite kapazitive Energiespeicher CA mit dem zweiten Schalter S1 der Schaltgruppe 2 und mit dem zweiten unidirektionalen nicht-ansteuerbare Leistungshalbleiterschalter D2 der Schaltgruppe 2 zusammen verbunden sind. Der zweite kapazitive Energiespeicher CA ist zudem mit dem ersten unidirektionalen nicht-ansteuerbaren Leistungshalbleiterschalter D1 der Schaltgruppe 2 verbunden und die Gleichspannungsquelle 1 ist mit dem Verbindungspunkt des zweiten kapazitiven Energiespeichers CA mit dem ersten unidirektionalen nicht-ansteuerbaren Leistungshalbleiterschalter D1 der Schaltgruppe 2 verbunden. Erfindungsgemäss ist nun in die Verbindung der Gleichspannungsquelle 1 mit dem ersten Schalter S0 eine erste Induktivität L1 seriell eingeschaltet. Darüber hinaus ist in die Verbindung des zweiten Schalters S1 der Schaltgruppe 2 mit dem Verbindungspunkt des zweiten kapazitiven Energiespeichers CA mit dem zweiten unidirektionalen nicht-ansteuerbare Leistungshalbleiterschalter D2 der Schaltgruppe 2 eine zweite Induktivität L2 seriell eingeschaltet.

Durch Schliessen des ersten Schalters S0 und Öffnen des zweiten Schalters S1 wird der erste kapazitive Energiespeicher C geladen, so entstehen vorteilhaft nahezu keine Verluste, da die erste Induktivität L1 zusammen mit dem ersten kapazitiven Energiespeicher C einen Schwingkreis mit resonantem Verhalten bildet. Zudem wird der erste kapazitive Energiespeicher C auf den doppelten Spannungswert Vin der Gleichspannungsquelle 1 aufgeladen, so dass mit Vorteil eine verbesserte Ausnutzung des ersten kapazitiven Energiespeichers C erreicht werden kann. Wird bei Öffnen des ersten Schalters S0 und Schliessen des zweiten Schalters S1 der erste kapazitive Energiespeicher C entladen, so entstehen auch dann vorteilhaft nahezu keine Verluste, da die zweite Induktivität L2 zusammen mit dem ersten kapazitiven Energiespeicher C und dem zweiten kapazitiven Energiespeicher CA einen Schwingkreis mit resonantem Verhalten bildet. An den zweiten kapazitiven Energiespeicher CA lässt sich vorzugsweise parallel eine elektrische Last anschliessen, wobei sich der Spannungswert Vout an dem zweiten kapazitiven Energiespeicher CA wie folgt einstellt:

$$Vout = Vin/2,$$

d.h. es stellt sich am zweiten kapazitiven Energiespeicher CA als Spannungswert Vout der halbe Spannungswert Vin der Gleichspannungsquelle 1 ein.

Vorzugsweise entspricht der Wert der ersten Induktivität L1 dem Wert der zweiten Induktivität L2 bei der Ausführungsform der Umrichterschaltung gemäss Fig. 2

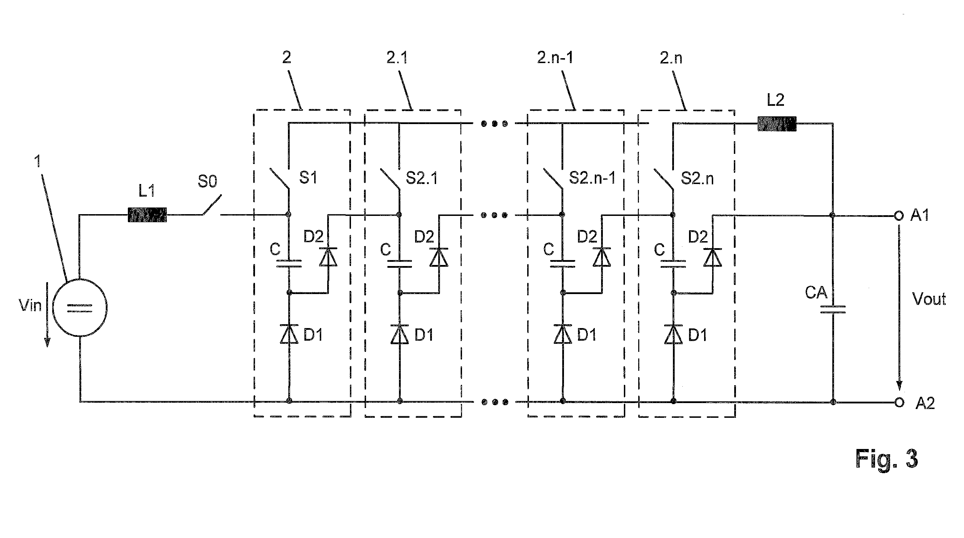

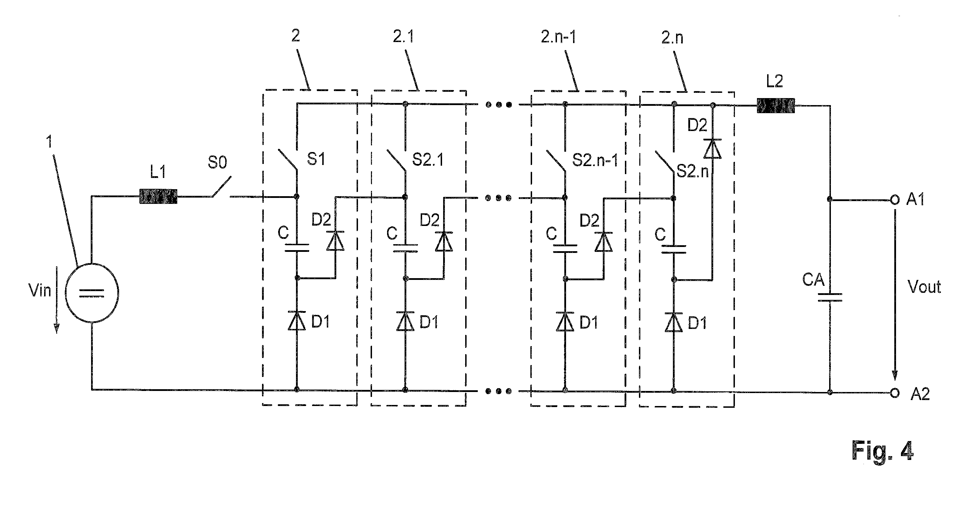

In Fig. 3 ist eine zweite Ausführungsform einer erfindungsgemässen Umrichterschaltung gezeigt. Diese alternative Umrichterschaltung zu Fig. 2 umfasst die Schaltgruppe 2 und zudem n weiterer Schaltgruppen 2.1, ..., 2.n, wobei n ≥ 1 ist und jede Schaltgruppe 2, 2.1, ..., 2.n den zweiten Schalter S1, S2.1, ..., S2.n, den ersten kapazitiven Energiespeicher C, den ersten und zweiten unidirektionalen nicht-ansteuerbaren Leistungshalbleiterschalter D1, D2 aufweist, wobei der zweite Schalter S1, S2.1, ..., S2.n mit dem ersten kapazitiven Energiespeicher C verbunden ist, der erste kapazitive Energiespeicher C mit dem ersten unidirektionalen nicht-ansteuerbaren Leistungshalbleiterschalter D1 verbunden ist und der zweite unidirektionale nicht-ansteuerbare Leistungshalbleiterschalter D2 mit dem Verbindungspunkt des ersten kapazitiven Energiespeichers C mit dem ersten unidirektionalen nicht-ansteuerbaren Leistungshalbleiterschalter D1 verbunden ist. Da es sich gemäss Fig. 3 bei der Schaltgruppe 2 und bei den n weiteren Schaltgruppen um als Sechspole ausgebildete Mehrpole handelt, ist in analoger Weise zur Vierpoltheorie jede der n weiteren Schaltgruppen 2.1, ..., 2.n verkettet mit der jeweils benachbarten weiteren Schaltgruppe 2.1, ..., 2.n verbunden und die Schaltgruppe 2 mit der ersten weiteren Schaltgruppe 2.1 verkettet verbunden, wobei die ersten unidirektionalen nicht-ansteuerbaren Leistungshalbleiterschalter D1 der Schaltgruppen 2, 2.1, ..., 2.n miteinander verbunden sind. Die Umrichterschaltung umfasst desweiteren den zweiten kapazitiven Energiespeicher CA, welcher zweite kapazitive Energiespeicher CA mit dem zweiten Schalter S2.n der n-ten weiteren Schaltgruppe 2.n und mit dem zweiten unidirektionalen nicht-ansteuerbare Leistungshalbleiterschalter D2 der n-ten weiteren Schaltgruppe 2.n zusammen verbunden sind und der zweite kapazitive Energiespeicher CA und die Gleichspannungsquelle 1 mit dem Verbindungspunkt der ersten unidirektionalen nicht-ansteuerbaren Leistungshalbleiterschalter D1 der Schaltgruppen 2, 2.1, ..., 2.n verbunden ist. Erfindungsgemäss ist auch bei dieser alternativen Umrichterschaltung in die Verbindung der Gleichspannungsquelle 1 mit dem ersten Schalter S0 die erste Induktivität L1 seriell eingeschaltet. Zudem ist in die Verbindung des zweiten Schalters S2.n der n-ten weiteren Schaltgruppe 2.n mit dem Verbindungspunkt des zweiten kapazitiven Energiespeichers CA mit dem zweiten unidirektionalen nicht-ansteuerbare Leistungshalbleiterschalter D2 der n-ten weiteren Schaltgruppe 2.n nun die zweite Induktivität L2 seriell eingeschaltet oder gemäss einer dritte Ausführungsform der erfindungsgemässen Umrichterschaltung nach Fig. 4 in die Verbindung des zweiten kapazitiven Energiespeichers CA mit dem Verbindungspunkt des zweiten Schalters S2.n der n-ten weiteren Schaltgruppe 2.n mit dem zweiten unidirektionalen nicht-ansteuerbare Leistungshalbleiterschalter D2 der n-ten weiteren Schaltgruppe 2.n die zweite Induktivität L2 seriell eingeschaltet.

Durch Schliessen des ersten Schalters S0 und Öffnen der zweiten Schalter S1, S2.1, ..., S2.n aller Schaltgruppen 2, 2.1, ..., 2.n wird der erste kapazitive Energiespeicher C einer jeden Schaltgruppe 2, 2.1, ..., 2.n geladen, wobei vorteilhaft nahezu keine Verluste entstehen, da die erste Induktivität L1 zusammen mit den ersten kapazitiven Energiespeichern C der Schaltgruppen 2, 2.1, ..., 2.n einen Schwingkreis mit resonantem Verhalten bildet. Zudem werden die ersten kapazitiven Energiespeicher C auf den doppelten Spannungswert Vin der Gleichspannungsquelle 1 aufgeladen, so dass mit Vorteil eine verbesserte Ausnutzung der ersten kapazitiven Energiespeicher C erreicht werden kann. Wird bei Öffnen des ersten Schalters S0 und Schliessen zumindest eines der zweiten Schalter S1, S2.1, ..., S2.n der Schaltgruppen 2, 2.1, ..., 2.n der zugehörige erste kapazitive Energiespeicher C entladen, so entstehen auch dann vorteilhaft nahezu keine Verluste, da die zweite Induktivität L2 zusammen mit dem entsprechenden ersten kapazitiven Energiespeicher C und dem zweiten kapazitiven Energiespeicher CA oder, im Falle mehrerer geschlossener zweiter Schalter S1, S2.1, ..., S2.n, mit den entsprechenden ersten kapazitiven Energiespeichern C und dem zweiten kapazitiven Energiespeicher CA einen Schwingkreis mit resonantem Verhalten bildet. Zudem lässt sich durch das flexible Schliessen mindestens eines zweiten Schalters S1, S2.1, ..., S2.n der Schaltgruppen 2, 2.1, ..., 2.n mit Vorteil die Spannung Vout am zweiten kapazitiven Energiespeicher CA einstellen, an welchen zweiten kapazitiven Energiespeicher CA eine elektrische Last, vorzugsweise parallel, angeschlossen werden kann.

Bei den Ausführungsformen gemäss Fig. 3 und Fig. 4 entspricht der Wert der ersten Induktivität L1 dem n-fachen Wert der zweiten Induktivität L2, wodurch die zweite Induktivität L2 mit Vorteil wertemässig n-mal kleiner als die erste Induktivität L1 gewählt werden kann.

Nach der Erfindung laufen bezüglich des Betriebes der erfindungsgemässen Umrichterschaltung gemäss Fig. 2 mit der einen Schaltgruppe 2 verfahrensmässig folgende Schritte ab:

(a) für einen einstellbaren ersten Zeitraum t1 Schliessen des ersten Schalters S0 und Öffnen des zweiten Schalters S1,
wodurch sichergestellt werden kann, dass der erste kapazitive Energiespeicher C ausreichend und ohne nennenswerte Verluste auf den doppelten Spannungswert Vin der Gleichspannungsquelle 1 geladen wird.
(b) nach Ablauf des einstellbaren ersten Zeitraums t1 Öffnen des ersten Schalters S0 für einen einstellbaren zweiten Zeitraum t2 und Schliessen des zweiten Schalters S1 für den einstellbaren zweiten Zeitraum t2,
wodurch der erste kapazitive Energiespeicher C über die zweite Induktivität L2 je nach Einstellung des zweiten Zeitraums t2 auf ein gewisses Mass entladen wird und der zweite kapazitive Energiespeicher CA geladen wird,
und
(c) nach Ablauf des einstellbaren zweiten Zeitraums t2 wiederholen der Schritte (a) bis (b).

Insgesamt kann durch diesen Betrieb der Umrichterschaltung gemäss Fig. 2 in sehr einfacher Weise erreicht werden, dass fast keine Verluste auftreten und eine an den zweiten kapazitiven Energiespeicher CA beispielsweise angeschlossene elektrische Last stets ausreichend mit elektrischer Energie und einem stabilen Spannungswert versorgt werden kann.

Nach der Erfindung laufen bezüglich des Betriebes der erfindungsgemässen Umrichterschaltung gemäss Fig. 3 und Fig. 4 mit der Schaltgruppe 2 und den n weiteren Schaltgruppen 2.1, ..., 2.n verfahrensmässig folgende Schritte ab:

(a) für einen einstellbaren ersten Zeitraum t1 Schliessen des ersten Schalters (S0) und Öffnen der zweiten Schalter S1, S2.1, ..., S2.n,
wodurch vorteilhaft sichergestellt werden kann, dass sämtliche erste kapazitive Energiespeicher C der Schaltgruppen 2, 2.1, ..., 2.n ausreichend und ohne nennenswerte Verluste auf den doppelten Spannungswert Vin der Gleichspannungsquelle 1 geladen werden.
(b) nach Ablauf des einstellbaren ersten Zeitraums t1 Öffnen des ersten Schalters (S0) und geöffnet Halten des ersten Schalters S0,
(c) nach Ablauf des einstellbaren ersten Zeitraums t1 Schliessen mindestens eines der zweiten Schalter S1, S2.1, ..., S2.n für einen einstellbaren zweiten Zeitraum t2,
(d) nach Ablauf des einstellbaren zweiten Zeitraums t2 Öffnen des bei Schritt (c) geschlossenen mindestens einen zweiten Schalters S1, S2.1, ..., S2.n und geöffnet halten des bei Schritt (c) geöffneten mindestens einen zweiten Schalters S1, S2.1, ..., S2.n,
(e) nach Ablauf des einstellbaren zweiten Zeitraums t2 Schliessen mindestens eines zuvor noch nicht geschlossenen zweiten Schalters S1, S2.1, ..., S2.n für den einstellbaren zweiten Zeitraums t2,
(f) nach Ablauf des einstellbaren zweiten Zeitraums t2 Öffnen des bei Schritt (e) geschlossenen mindestens einen zweiten Schalters S1, S2.1, ..., S2.n und geöffnet halten des bei Schritt (e) geöffneten mindestens einen zweiten Schalters S1, S2.1, ..., S2.n,

(g) Wiederholen des Schrittes (e) und (f) solange, bis alle zweiten Schalter S1, S2.1, ..., S2.n einmal geschlossen und wieder geöffnet wurden,

(h) wiederholen der Schritte (a) bis (g).

Durch das Schliessen mindestens eines der zweiten Schalter wird der erste kapazitive Energiespeicher C bzw. die ersten kapazitiven Energiespeicher C über die zweite Induktivität L2 je nach Einstellung des zweiten Zeitraums t2 auf ein gewisses Mass entladen und der zweite kapazitive Energiespeicher CA geladen. Ferner lässt sich durch das vorstehend beschriebene flexible Schliessen mindestens eines zweiten Schalters S1, S2.1, ..., S2.n der Schaltgruppen 2, 2.1, ..., 2.n mit Vorteil die Spannung Vout am zweiten kapazitiven Energiespeicher CA einstellen und damit eine beispielsweise an den zweiten kapazitiven Energiespeicher CA angeschlossene elektrische Last optimal versorgen.

Wir das vorstehend beschriebene Verfahren zum Betrieb der erfindungsgemässen Umrichterschaltung nach Fig. 3 und Fig. 4 bezüglich der Schritte (c) bis (g) anstelle für mindestens einen zweiten Schalters S1, S2.1, ..., S2.n genau für immer einen zweiten Schalters S1, S2.1, ..., S2.n durchgeführt, dann stellt sich der Spannungswert Vout an dem zweiten kapazitiven Energiespeicher CA vorteilhaft wie folgt einstellt:

$$Vout = Vin/(n+2),$$

d.h. es stellt sich beispielsweise für n=3 weitere Schaltgruppen 2.1, 2.2, 2.3 am zweiten kapazitiven Energiespeicher CA als Spannungswert Vout ein Fünftel des Spannungswerts Vin der Gleichspannungsquelle 1 ein.

Alternative laufen bezüglich des Betriebes der erfindungsgemässen Umrichterschaltung gemäss Fig. 3 und Fig. 4 mit der Schaltgruppe 2 und den n weiteren Schaltgruppen 2.1, ..., 2.n verfahrensmässig folgende Schritte ab:

(a) für einen einstellbaren ersten Zeitraum t1 Schliessen des ersten Schalters S0 und Schliessen einer Anzahl der zweiten Schaltern S1, S2.1, ..., S2.n, wobei die Anzahl kleiner n ist, und Öffnen der nicht geschlossen zweiten Schalter S1, S2.1, ..., S2.n,

(b) nach Ablauf des einstellbaren ersten Zeitraums t1 Öffnen des ersten Schalters S0, geöffnet Halten des ersten Schalters S0, Öffnen der unter Schritt (a) geschlossenen zweiten Schalter S1, S2.1, ..., S2.n und geöffnet Halten der unter Schritt (a) geschlossenen zweiten Schalter S1, S2.1, ..., S2.n,

(c) nach Ablauf des einstellbaren ersten Zeitraums t1 Schliessen mindestens eines der unter Schritt (a) geöffneten zweiten Schalter S1, S2.1, ..., S2.n für einen einstellbaren zweiten Zeitraum t2,

(d) nach Ablauf des einstellbaren zweiten Zeitraums t2 Öffnen des bei Schritt (c) geschlossenen mindestens einen zweiten Schalters S1, S2.1, ..., S2.n und geöffnet halten des bei Schritt (c) geöffneten mindestens einen zweiten Schalters S1, S2.1, ..., S2.n,

(e) nach Ablauf des einstellbaren zweiten Zeitraums t2 Schliessen mindestens eines zuvor noch nicht geschlossenen zweiten Schalters S1, S2.1, ..., S2.n für den einstellbaren zweiten Zeitraums t2,

(f) nach Ablauf des einstellbaren zweiten Zeitraums t2 Öffnen des bei Schritt (e) geschlossenen mindestens einen zweiten Schalters S1, S2.1, ..., S2.n und geöffnet halten des bei Schritt (e) geöffneten mindestens einen zweiten Schalters S1, S2.1, ..., S2.n,

(g) Wiederholen des Schrittes (e) und (f) solange, bis alle zweiten Schalter S1, S2.1, ..., S2.n einmal geschlossen und wieder geöffnet wurden,

(h) wiederholen der Schritte (a) bis (g).

Durch diese Alternative ist der Spannungswert Vout am zweiten kapazitiven Energiespeicher CA mit Vorteil variable einstellbar.

### Bezugszeichenliste

| 1 | Gleichspannungsquelle |
|---|---|
| 2 | Schaltgruppe |
| 2.1,... 2.n | n weitere Schaltgruppen |
| S0 | erster Schalter |
| S1 | zweiter Schalter der Schaltgruppe |
| S2.1,...,S2.n | zweite Schalter der n weiteren Schaltgruppen |
| C | erster kapazitiver Energiespeicher der Schaltgruppe und der n weiteren Schaltgruppen |
| D1 | erster unidirektionaler nicht-ansteuerbarer Leistungshalbleiterschalter der Schaltgruppe und der n weiteren Schaltgruppen |
| D2 | erster unidirektionalen nicht-ansteuerbaren Leistungshalbleiterschalter der Schaltgruppe und der n weiteren Schaltgruppen |
| L1 | erste Induktivität |
| L2 | zweite Induktivität |
| CA | zweiter kapazitiver Energiespeichers |
| A1, A2 | Lastanschlüsse |

### Patentansprüche

1. Umrichterschaltung mit einer Gleichspannungsquelle (1),
mit einem mit der Gleichspannungsquelle (1) verbundenen ersten Schalter (S0),
mit einer Schaltgruppe (2), welche Schaltgruppe (2)

einen zweiten Schalter (S1), einen ersten kapazitiven Energiespeicher (C), einen ersten und einen zweiten unidirektionalen nicht-ansteuerbaren Leistungshalbleiterschalter (D1, D2) aufweist, wobei der zweite Schalter (S1) mit dem ersten kapazitiven Energiespeicher (C) verbunden ist, der erste kapazitive Energiespeicher (C) mit dem ersten unidirektionalen nicht-ansteuerbaren Leistungshalbleiterschalter (D1) verbunden ist und der zweite unidirektionale nicht-ansteuerbare Leistungshalbleiterschalter (D2) mit dem Verbindungspunkt des ersten kapazitiven Energiespeichers (C) mit dem ersten unidirektionalen nicht-ansteuerbaren Leistungshalbleiterschalter (D1) verbunden ist,

mit einem zweiten kapazitiven Energiespeicher (CA), welcher zweite kapazitive Energiespeicher (CA) mit dem zweiten Schalter (S1) der Schaltgruppe (2) und mit dem zweiten unidirektionalen nicht-ansteuerbare Leistungshalbleiterschalter (D2) der Schaltgruppe (2) zusammen verbunden sind, der zweite kapazitive Energiespeicher (CA) mit dem ersten unidirektionalen nicht-ansteuerbaren Leistungshalbleiterschalter (D1) der Schaltgruppe (2) verbunden ist und die Gleichspannungsquelle (1) mit dem Verbindungspunkt des zweiten kapazitiven Energiespeichers (CA) mit dem ersten unidirektionalen nicht-ansteuerbaren Leistungshalbleiterschalter (D1) der Schaltgruppe (2) verbunden ist,
**dadurch gekennzeichnet,**
**dass** in die Verbindung der Gleichspannungsquelle (1) mit dem ersten Schalter (S0) eine erste Induktivität (L1) seriell eingeschaltet ist, und
**dass** in die Verbindung des zweiten Schalters (S1) der Schaltgruppe (2) mit dem Verbindungspunkt des zweiten kapazitiven Energiespeichers (CA) mit dem zweiten unidirektionalen nicht-ansteuerbare Leistungshalbleiterschalter (D2) der Schaltgruppe (2) eine zweite Induktivität (L2) seriell eingeschaltet ist.

2. Umrichterschaltung mit einer Gleichspannungsquelle (1),
mit einem mit der Gleichspannungsquelle (1) verbundenen ersten Schalter (S0), mit einer Schaltgruppe (2) und n weiteren Schaltgruppen (2.1, ..., 2.n), wobei n ≥ 1 ist und jede Schaltgruppe (2, 2.1, ..., 2.n) einen zweiten Schalter (S1, S2.1, ..., S2.n), einen ersten kapazitiven Energiespeicher (C), einen ersten und einen zweiten unidirektionalen nicht-ansteuerbaren Leistungshalbleiterschalter (D1, D2) aufweist, wobei der zweite Schalter (S1, S2.1, ..., S2.n) mit dem ersten kapazitiven Energiespeicher (C) verbunden ist, der erste kapazitive Energiespeicher (C) mit dem ersten unidirektionalen nicht-ansteuerbaren Leistungshalbleiterschalter (D1) verbunden ist, der zweite unidirektionale nicht-ansteuerbare Leistungshalbleiterschalter (D2) mit dem Verbindungspunkt des ersten kapazitiven Energiespeichers (C) mit dem ersten unidirektionalen nicht-ansteuerbaren Leistungshalbleiterschalter (D1) verbunden ist, jede der n weiteren Schaltgruppen (2.1, ...2.n) verkettet mit der jeweils benachbarten weiteren Schaltgruppe (2.1, ...2.n) verbunden ist und die Schaltgruppe (2) mit der ersten weiteren Schaltgruppe (2.1) verkettet verbunden ist, wobei

steuerbaren Leistungshalbleiterschalter (D1) verbunden ist, jede der n weiteren Schaltgruppen (2.1, ...2.n) verkettet mit der jeweils benachbarten weiteren Schaltgruppe (2.1, ...2.n) verbunden ist und die Schaltgruppe (2) mit der ersten weiteren Schaltgruppe (2.1) verkettet verbunden ist, wobei die ersten unidirektionalen nicht-ansteuerbaren Leistungshalbleiterschalter (D1) der Schaltgruppen (2, 2.1, ..., 2.n) miteinander verbunden sind,
mit einem zweiten kapazitiven Energiespeicher (CA), welcher zweite kapazitive Energiespeicher (CA) mit dem zweiten Schalter (S2.n) der n-ten weiteren Schaltgruppe (2.n) und mit dem zweiten unidirektionalen nicht-ansteuerbare Leistungshalbleiterschalter (D2) der n-ten weiteren Schaltgruppe (2.n) zusammen verbunden sind, der zweite kapazitive Energiespeicher (CA) und die Gleichspannungsquelle (1) mit dem Verbindungspunkt der ersten unidirektionalen nicht-ansteuerbaren Leistungshalbleiterschalter (D1) der Schaltgruppen (2, 2.1, ..., 2.n) verbunden ist,
**dadurch gekennzeichnet,**
**dass** in die Verbindung der Gleichspannungsquelle (1) mit dem ersten Schalter (S0) eine erste Induktivität (L1) seriell eingeschaltet ist, und
**dass** in die Verbindung des zweiten Schalters (S2.n) der n-ten weiteren Schaltgruppe (2.n) mit dem Verbindungspunkt des zweiten kapazitiven Energiespeichers (CA) mit dem zweiten unidirektionalen nicht-ansteuerbare Leistungshalbleiterschalter (D2) der n-ten weiteren Schaltgruppe (2.n) eine zweite Induktivität (L2) seriell eingeschaltet ist.

3. Umrichterschaltung mit einer Gleichspannungsquelle (1),
mit einem mit der Gleichspannungsquelle (1) verbundenen ersten Schalter (S0), mit einer Schaltgruppe (2) und n weiteren Schaltgruppen (2.1, ..., 2.n), wobei n ≥ 1 ist und jede Schaltgruppe (2, 2.1, ..., 2.n) einen zweiten Schalter (S1, S2.1, ..., S2.n), einen ersten kapazitiven Energiespeicher (C), einen ersten und einen zweiten unidirektionalen nicht-ansteuerbaren Leistungshalbleiterschalter (D1, D2) aufweist, wobei der zweite Schalter (S1, S2.1, ..., S2.n) mit dem ersten kapazitiven Energiespeicher (C) verbunden ist, der erste kapazitive Energiespeicher (C) mit dem ersten unidirektionalen nicht-ansteuerbaren Leistungshalbleiterschalter (D1) verbunden ist, der zweite unidirektionale nicht-ansteuerbare Leistungshalbleiterschalter (D2) mit dem Verbindungspunkt des ersten kapazitiven Energiespeichers (C) mit dem ersten unidirektionalen nicht-ansteuerbaren Leistungshalbleiterschalter (D1) verbunden ist, jede der n weiteren Schaltgruppen (2.1, ...2.n) verkettet mit der jeweils benachbarten weiteren Schaltgruppe (2.1, ...2.n) verbunden ist und die Schaltgruppe (2) mit der ersten weiteren Schaltgruppe (2.1) verkettet verbunden ist, wobei die ersten unidirektionalen nicht-ansteuerbaren Leistungshalbleiterschalter (D1) der Schaltgruppen (2, 2.1, ..., 2.n) miteinander verbunden sind,

mit einem zweiten kapazitiven Energiespeicher (CA), welcher zweite kapazitive Energiespeicher (CA) mit dem zweiten Schalter (S2.n) der n-ten weiteren Schaltgruppe (2.n) und mit dem zweiten unidirektionalen nicht-ansteuerbare Leistungshalbleiterschalter (D2) der n-ten weiteren Schaltgruppe (2.n) zusammen verbunden sind, der zweite kapazitive Energiespeicher (CA) und die Gleichspannungsquelle (1) mit dem Verbindungspunkt der ersten unidirektionalen nicht-ansteuerbaren Leistungshalbleiterschalter (D1) der Schaltgruppen (2, 2.1, ..., 2.n) verbunden ist,

**dadurch gekennzeichnet,**

**dass** in die Verbindung der Gleichspannungsquelle (1) mit dem ersten Schalter (S0) eine erste Induktivität (L1) seriell eingeschaltet ist, und

**dass** in die Verbindung des zweiten kapazitiven Energiespeichers (CA) mit dem Verbindungspunkt des zweiten Schalters (S2.n) der n-ten weiteren Schaltgruppe (2.n) mit dem zweiten unidirektionalen nichtansteuerbare Leistungshalbleiterschalter (D2) der n-ten weiteren Schaltgruppe (2.n) eine zweite Induktivität (L2) seriell eingeschaltet ist.

4. Umrichterschaltung nach Anspruch 1, **dadurch gekennzeichnet, dass** der Wert der ersten Induktivität (L1) dem Wert der zweiten Induktivität (L2) entspricht.

5. Umrichterschaltung nach Anspruch 2 oder 3, **dadurch gekennzeichnet, dass** der Wert der ersten Induktivität (L1) dem n-fachen Wert der zweiten Induktivität (L2) entspricht.

6. Verfahren zum Betrieb einer Umrichterschaltung nach Anspruch 1 mit den Schritten

   (a) für einen einstellbaren ersten Zeitraum (t1) Schliessen des ersten Schalters (S0) und Öffnen des zweiten Schalters (S1),
   (b) nach Ablauf des einstellbaren ersten Zeitraums (t1) Öffnen des ersten Schalters (S0) für einen einstellbaren zweiten Zeitraum (t2) und Schliessen des zweiten Schalters (S1) für den einstellbaren zweiten Zeitraum (t2), und
   (c) nach Ablauf des einstellbaren zweiten Zeitraums (t2) wiederholen der Schritte (a) bis (b).

7. Verfahren zum Betrieb einer Umrichterschaltung nach Anspruch 2 oder 3 mit den Schritten

   (a) für einen einstellbaren ersten Zeitraum (t1) Schliessen des ersten Schalters (S0) und Öffnen der zweiten Schalter (S1, S2.1, ..., S2.n),
   (b) nach Ablauf des einstellbaren ersten Zeitraums (t1) Öffnen des ersten Schalters (S0) und geöffnet Halten des ersten Schalters (S0),
   (c) nach Ablauf des einstellbaren ersten Zeitraums (t1) Schliessen mindestens eines der zweiten Schalter (S1, S2.1, ..., S2.n) für einen einstellbaren zweiten Zeitraum (t2),
   (d) nach Ablauf des einstellbaren zweiten Zeitraums (t2) Öffnen des bei Schritt (c) geschlossenen mindestens einen zweiten Schalters (S1, S2.1, ..., S2.n) und geöffnet Halten des bei Schritt (c) geöffneten mindestens einen zweiten Schalters (S1, S2.1, ..., S2.n),
   (e) nach Ablauf des einstellbaren zweiten Zeitraums (t2) Schliessen mindestens eines zuvor noch nicht geschlossenen zweiten Schalters (S1, S2.1, ..., S2.n) für den einstellbaren zweiten Zeitraums (t2),
   (f) nach Ablauf des einstellbaren zweiten Zeitraums (t2) Öffnen des bei Schritt (e) geschlossenen mindestens einen zweiten Schalters (S1, S2.1, ..., S2.n) und geöffnet halten des bei Schritt (e) geöffneten mindestens einen zweiten Schalters (S1, S2.1, ..., S2.n),
   (g) Wiederholen des Schrittes (e) und (f) solange, bis alle zweiten Schalter (S1, S2.1, ..., S2.n) einmal geschlossen und wieder geöffnet wurden,
   (h) wiederholen der Schritte (a) bis (g).

8. Verfahren zum Betrieb einer Umrichterschaltung nach Anspruch 2 oder 3 mit den Schritten

   (a) für einen einstellbaren ersten Zeitraum (t1) Schliessen des ersten Schalters (S0) und Schliessen einer Anzahl der zweiten Schaltern (S1, S2.1, ..., S2.n), wobei die Anzahl kleiner n ist, und Öffnen der nicht geschlossen zweiten Schalter (S1, S2.1, ..., S2.n),
   (b) nach Ablauf des einstellbaren ersten Zeitraums (t1) Öffnen des ersten Schalters (S0), geöffnet Halten des ersten Schalters (S0), Öffnen der unter Schritt (a) geschlossenen zweiten Schalter (S1, S2.1, ..., S2.n) und geöffnet Halten der unter Schritt (a) geschlossenen zweiten Schalter (S1, S2.1, ..., S2.n),
   (c) nach Ablauf des einstellbaren ersten Zeitraums (t1) Schliessen mindestens eines der unter Schritt (a) geöffneten zweiten Schalter (S1, S2.1, ..., S2.n) für einen einstellbaren zweiten Zeitraum (t2),
   (d) nach Ablauf des einstellbaren zweiten Zeitraums (t2) Öffnen des bei Schritt (c) geschlossenen mindestens einen zweiten Schalters (S1, S2.1, ..., S2.n) und geöffnet halten des bei Schritt (c) geöffneten mindestens einen zweiten Schalters (S1, S2.1, ..., S2.n),
   (e) nach Ablauf des einstellbaren zweiten Zeitraums (t2) Schliessen mindestens eines zuvor noch nicht geschlossenen zweiten Schalters (S1, S2.1, ..., S2.n) für den einstellbaren zweiten Zeitraums (t2),

(f) nach Ablauf des einstellbaren zweiten Zeitraums (t2) Öffnen des bei Schritt (e) geschlossenen mindestens einen zweiten Schalters (S1, S2.1, ..., S2.n) und geöffnet halten des bei Schritt (e) geöffneten mindestens einen zweiten Schalters (S1, S2.1, ..., S2.n),

(g) Wiederholen des Schrittes (e) und (f) solange, bis alle zweiten Schalter (S1, S2.1, ..., S2.n) einmal geschlossen und wieder geöffnet wurden,

(h) wiederholen der Schritte (a) bis (g).

**Geänderte Patentansprüche gemäss Regel 137(2) EPÜ.**

**1.** Umrichterschaltung mit einer Gleichspannungsquelle (1),

mit einem mit der Gleichspannungsquelle (1) verbundenen ersten Schalter (S0),

mit einer Schaltgruppe (2), welche Schaltgruppe (2) einen zweiten Schalter (S1), einen ersten kapazitiven Energiespeicher (C), einen ersten und einen zweiten unidirektionalen nicht-ansteuerbaren Leistungshalbleiterschalter (D1, D2) aufweist, wobei der zweite Schalter (S1) mit dem ersten kapazitiven Energiespeicher (C) verbunden ist, der erste kapazitive Energiespeicher (C) mit dem ersten unidirektionalen nicht-ansteuerbaren Leistungshalbleiterschalter (D1) verbunden ist, der zweite unidirektionale nicht-ansteuerbare Leistungshalbleiterschalter (D2) mit dem Verbindungspunkt des ersten kapazitiven Energiespeichers (C) mit dem ersten unidirektionalen nicht-ansteuerbaren Leistungshalbleiterschalter (D1) verbunden ist und der erste Schalter (50) mit dem Verbindungspunkt des zweiten Schalters (S1) mit dem ersten kapazitiven Energiespeicher (C) verbunden ist,

mit einem zweiten kapazitiven Energiespeicher (CA), welcher zweite kapazitive Energiespeicher (CA) mit dem zweiten Schalter (S1) der Schaltgruppe (2) und mit dem zweiten unidirektionalen nicht-ansteuerbare Leistungshalbleiterschalter (D2) der Schaltgruppe (2) zusammen verbunden sind, der zweite kapazitive Energiespeicher (CA) mit dem ersten unidirektionalen nicht-ansteuerbaren Leistungshalbleiterschalter (D1) der Schaltgruppe (2) verbunden ist und die Gleichspannungsquelle (1) mit dem Verbindungspunkt des zweiten kapazitiven Energiespeichers (CA) mit dem ersten unidirektionalen nicht-ansteuerbaren Leistungshalbleiterschalter (D1) der Schaltgruppe (2) verbunden ist,

**dadurch gekennzeichnet,**

**dass** in die Verbindung der Gleichspannungsquelle (1) mit dem ersten Schalter (S0) eine erste Induktivität (L1) seriell eingeschaltet ist, und

**dass** in die Verbindung des zweiten Schalters (S1) der Schaltgruppe (2) mit dem Verbindungspunkt des zweiten kapazitiven Energiespeichers (CA) mit dem zweiten unidirektionalen nicht-ansteuerbare Leistungshalbleiterschalter (D2) der Schaltgruppe (2) eine zweite Induktivität (L2) seriell eingeschaltet ist.

**2.** Umrichterschaltung mit einer Gleichspannungsquelle (1),

mit einem mit der Gleichspannungsquelle (1) verbundenen ersten Schalter (50),

mit einer Schaltgruppe (2) und n weiteren Schaltgruppen (2.1, ..., 2.n), wobei n ≥ 1 ist und jede Schaltgruppe (2, 2.1, ..., 2.n) einen zweiten Schalter (S1, S2.1, ..., S2.n), einen ersten kapazitiven Energiespeicher (C), einen ersten und einen zweiten unidirektionalen nicht-ansteuerbaren Leistungshalbleiterschalter (D1, D2) aufweist, wobei der zweite Schalter (S1, S2.1, ..., S2.n) mit dem ersten kapazitiven Energiespeicher (C) verbunden ist, der erste kapazitive Energiespeicher (C) mit dem ersten unidirektionalen nicht-ansteuerbaren Leistungshalbleiterschalter (D1) verbunden ist, der zweite unidirektionale nicht-ansteuerbare Leistungshalbleiterschalter (D2) mit dem Verbindungspunkt des ersten kapazitiven Energiespeichers (C) mit dem ersten unidirektionalen nicht-ansteuerbaren Leistungshalbleiterschalter (D1) verbunden ist, der erste Schalter (S0) mit dem Verbindungspunkt des zweiten Schalters (S1) mit dem ersten kapazitiven Energiespeicher (C) der Schaltgruppe (2) verbunden ist, jede der n weiteren Schaltgruppen (2.1, 1, ...2.n) verkettet mit der jeweils benachbarten weiteren Schaltgruppe (2.1, ...2.n) verbunden ist und die Schaltgruppe (2) mit der ersten weiteren Schaltgruppe (2.1) verkettet verbunden ist, wobei die ersten unidirektionalen nicht-ansteuerbaren Leistungshalbleiterschalter (D1) der Schaltgruppen (2, 2.1, ..., 2.n) miteinander verbunden sind,

mit einem zweiten kapazitiven Energiespeicher (CA), welcher zweite kapazitive Energiespeicher (CA) mit dem zweiten Schalter (S2.n) der n-ten weiteren Schaltgruppe (2.n) und mit dem zweiten unidirektionalen nicht-ansteuerbare Leistungshalbleiterschalter (D2) der n-ten weiteren Schaltgruppe (2.n) zusammen verbunden sind, der zweite kapazitive Energiespeicher (CA) und die Gleichspannungsquelle (1) mit dem Verbindungspunkt der ersten unidirektionalen nicht-ansteuerbaren Leistungshalbleiterschalter (D1) der Schaltgruppen (2, 2.1, ..., 2.n) verbunden ist,

**dadurch gekennzeichnet,**

**dass** in die Verbindung der Gleichspannungsquelle (1) mit dem ersten Schalter (50) eine erste Induktivität (L1) seriell eingeschaltet ist, und

**dass** in die Verbindung des zweiten Schalters (S2.n) der n-ten weiteren Schaltgruppe (2.n) mit dem Verbindungspunkt des zweiten kapazitiven Energiespeichers (CA) mit dem zweiten unidirektionalen nicht-ansteuerbare Leistungshalbleiterschalter (D2) der n-ten weiteren Schaltgruppe (2.n) eine zweite Induktivität (L2) seriell eingeschaltet ist.

**3.** Umrichterschaltung mit einer Gleichspannungsquelle (1),
mit einem mit der Gleichspannungsquelle (1) verbundenen ersten Schalter (50),
mit einer Schaltgruppe (2) und n weiteren Schaltgruppen (2.1, ..., 2.n), wobei n ≥ 1 ist und jede Schaltgruppe (2, 2.1, ..., 2.n) einen zweiten Schalter (S1, S2.1, ..., S2.n), einen ersten kapazitiven Energiespeicher (C), einen ersten und einen zweiten unidirektionalen nicht-ansteuerbaren Leistungshalbleiterschalter (D1, D2) aufweist, wobei der zweite Schalter (S1, S2.1,..., S2.n) mit dem ersten kapazitiven Energiespeicher (C) verbunden ist, der erste kapazitive Energiespeicher (C) mit dem ersten unidirektionalen nicht-ansteuerbaren Leistungshalbleiterschalter (D1) verbunden ist, der zweite unidirektionale nicht-ansteuerbare Leistungshalbleiterschalter (D2) mit dem Verbindungspunkt des ersten kapazitiven Energiespeichers (C) mit dem ersten unidirektionalen nicht-ansteuerbaren Leistungshalbleiterschalter (D1) verbunden ist, der erste Schalter (50) mit dem Verbindungspunkt des zweiten Schalters (S1) mit dem ersten kapazitiven Energiespeicher (C) der Schaltgruppe (2) verbunden ist, jede der n weiteren Schaltgruppen (2.1, ...2.n) verkettet mit der jeweils benachbarten weiteren Schaltgruppe (2.1, ...2.n) verbunden ist und die Schaltgruppe (2) mit der ersten weiteren Schaltgruppe (2.1) verkettet verbunden ist, wobei die ersten unidirektionalen nicht-ansteuerbaren Leistungshalbleiterschalter (D1) der Schaltgruppen (2, 2.1, ..., 2.n) miteinander verbunden sind,
mit einem zweiten kapazitiven Energiespeicher (CA), welcher zweite kapazitive Energiespeicher (CA) mit dem zweiten Schalter (S2.n) der n-ten weiteren Schaltgruppe (2.n) und mit dem zweiten unidirektionalen nicht-ansteuerbare Leistungshalbleiterschalter (D2) der n-ten weiteren Schaltgruppe (2.n) zusammen verbunden sind, der zweite kapazitive Energiespeicher (CA) und die Gleichspannungsquelle (1) mit dem Verbindungspunkt der ersten unidirektionalen nicht-ansteuerbaren Leistungshalbleiterschalter (D1) der Schaltgruppen (2, 2.1, ..., 2.n) verbunden ist,
**dadurch gekennzeichnet,**
**dass** in die Verbindung der Gleichspannungsquelle (1) mit dem ersten Schalter (50) eine erste Induktivität (L1) seriell eingeschaltet ist, und
**dass** in die Verbindung des zweiten kapazitiven Energiespeichers (CA) mit dem Verbindungspunkt des zweiten Schalters (S2.n) der n-ten weiteren Schaltgruppe (2.n) mit dem zweiten unidirektionalen nicht-ansteuerbare Leistungshalbleiterschalter (D2) der n-ten weiteren Schaltgruppe (2.n) eine zweite Induktivität (L2) seriell eingeschaltet ist.

**4.** Umrichterschaltung nach Anspruch 1, **dadurch gekennzeichnet, dass** der Wert der ersten Induktivität (L1) dem Wert der zweiten Induktivität (L2) entspricht.

**5.** Umrichterschaltung nach Anspruch 2 oder 3, **dadurch gekennzeichnet, dass** der Wert der ersten Induktivität (L1) dem n-fachen Wert der zweiten Induktivität (L2) entspricht.

**6.** Verfahren zum Betrieb einer Umrichterschaltung nach Anspruch 1 mit den Schritten

(a) für einen einstellbaren ersten Zeitraum (t1) Schliessen des ersten Schalters (50) und Öffnen des zweiten Schalters (S1),
(b) nach Ablauf des einstellbaren ersten Zeitraums (t1) Öffnen des ersten Schalters (S0) für einen einstellbaren zweiten Zeitraum (t2) und Schliessen des zweiten Schalters (S1) für den einstellbaren zweiten Zeitraum (t2), und
(c) nach Ablauf des einstellbaren zweiten Zeitraums (t2) wiederholen der Schritte (a) bis (b).

**7.** Verfahren zum Betrieb einer Umrichterschaltung nach Anspruch 2 oder 3 mit den Schritten

(a) für einen einstellbaren ersten Zeitraum (t1) Schliessen des ersten Schalters (50) und Öffnen der zweiten Schalter (S1, S2.1, ..., S2.n),
(b) nach Ablauf des einstellbaren ersten Zeitraums (t1) Öffnen des ersten Schalters (S0) und geöffnet Halten des ersten Schalters (50),
(c) nach Ablauf des einstellbaren ersten Zeitraums (t1) Schliessen mindestens eines der zweiten Schalter (S1, S2.1, ..., S2.n) für einen einstellbaren zweiten Zeitraum (t2),
(d) nach Ablauf des einstellbaren zweiten Zeitraums (t2) Öffnen des bei Schritt (c) geschlossenen mindestens einen zweiten Schalters (S1, S2.1, ..., S2.n) und geöffnet Halten des bei Schritt (c) geöffneten mindestens einen zweiten Schalters (S1, S2.1, ...,S2.n),
(e) nach Ablauf des einstellbaren zweiten Zeitraums (t2) Schliessen mindestens eines zuvor noch nicht geschlossenen zweiten Schalters (S1, S2.1, ..., S2.n) für den einstellbaren zweiten Zeitraums (t2),
(f) nach Ablauf des einstellbaren zweiten Zeitraums (t2) Öffnen des bei Schritt (e) geschlossenen mindestens einen zweiten Schalters (S1, S2.1, ..., S2.n) und geöffnet halten des bei Schritt (e) geöffneten mindestens einen zweiten Schalters (S1, S2.1, .., S2.n),

(g) Wiederholen des Schrittes (e) und (f) solange, bis alle zweiten Schalter (S1, S2.1, ..., S2.n) einmal geschlossen und wieder geöffnet wurden,
(h) wiederholen der Schritte (a) bis (g).

**8.** Verfahren zum Betrieb einer Umrichterschaltung nach Anspruch 2 oder 3 mit den Schritten

(a) für einen einstellbaren ersten Zeitraum (t1) Schliessen des ersten Schalters (50) und Schliessen einer Anzahl der zweiten Schaltern (S1, S2.1, ..., S2.n), wobei die Anzahl kleiner n ist, und Öffnen der nicht geschlossen zweiten Schalter (S1, 52.1, .., S2.n),
(b) nach Ablauf des einstellbaren ersten Zeitraums (t1) Öffnen des ersten Schalters (S0), geöffnet Halten des ersten Schalters (S0), Öffnen der unter Schritt (a) geschlossenen zweiten Schalter (S1, S2.1, ..., S2.n) und geöffnet Halten der unter Schritt (a) geschlossenen zweiten Schalter (S1, S2.1, ..., S2.n),
(c) nach Ablauf des einstellbaren ersten Zeitraums (t1) Schliessen mindestens eines der unter Schritt (a) geöffneten zweiten Schalter (S1, S2.1, ..., S2.n) für einen einstellbaren zweiten Zeitraum (t2),
(d) nach Ablauf des einstellbaren zweiten Zeitraums (t2) Öffnen des bei Schritt (c) geschlossenen mindestens einen zweiten Schalters (S1, S2.1, ..., S2.n) und geöffnet halten des bei Schritt (c) geöffneten mindestens einen zweiten Schalters (S1, S2.1, ...,S2.n),
(e) nach Ablauf des einstellbaren zweiten Zeitraums (t2) Schliessen mindestens eines zuvor noch nicht geschlossenen zweiten Schalters (S1, S2.1, ..., S2.n) für den einstellbaren zweiten Zeitraums (t2),
(f) nach Ablauf des einstellbaren zweiten Zeitraums (t2) Öffnen des bei Schritt (e) geschlossenen mindestens einen zweiten Schalters (S1, S2.1, ..., S2.n) und geöffnet halten des bei Schritt (e) geöffneten mindestens einen zweiten Schalters (S1, S2.1, ..., S2.n),
(g) Wiederholen des Schrittes (e) und (f) solange, bis alle zweiten Schalter (S1, S2.1, ..., S2.n) einmal geschlossen und wieder geöffnet wurden,
(h) wiederholen der Schritte (a) bis (g).

Stand der Technik

**Fig. 1**

Fig. 2

Fig. 3

Fig. 4

EP 2 043 243 A1

EP 2 043 243 A1

**Europäisches Patentamt**

**EUROPÄISCHER RECHERCHENBERICHT**

Nummer der Anmeldung

EP 07 11 7325

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 195 38 259 A1 (MATSUSHITA ELECTRIC WORKS LTD [JP]) 25. April 1996 (1996-04-25) * Spalten 1-27; Abbildungen zumidest,1,2,6-8,17,25,37,38 * | 1-8 | INV. H02M3/07 |
| X | WO 2005/122371 A (SIEMENS AG OESTERREICH [AT]; HALLAK JALAL [AT]) 22. Dezember 2005 (2005-12-22) * das ganze Dokument * | 1,4,6 | |
| X | US 5 761 058 A (KANDA TAKASHI [JP] ET AL) 2. Juni 1998 (1998-06-02) * Zusammenfassung * * Spalten 1-7; Abbildungen zumindest,1,7,8,42,43 * | 1-8 | |
| X | US 2006/139021 A1 (TAURAND CHRISTOPHE [FR]) 29. Juni 2006 (2006-06-29) * das ganze Dokument * | 1-8 | |
| D,Y | JIFENG HAN ET AL: "A new approach to reducing output ripple in switched-capacitor-based step-down DC-DC converters" INDUSTRY APPLICATIONS CONFERENCE, 2004. 39TH IAS ANNUAL MEETING. CONFERENCE RECORD OF THE 2004 IEEE SEATTLE, WA, USA 3-7 OCT. 2004, PISCATAWAY, NJ, USA,IEEE, 3. Oktober 2004 (2004-10-03), Seiten 1115-1120, XP010734543 ISBN: 0-7803-8486-5 * Absätze [000I], [00II], [0III]; Abbildungen 2,3,6 * | 1-8 | RECHERCHIERTE SACHGEBIETE (IPC) H02M |
| Y | EP 1 717 938 A (THOMSON LICENSING [FR]) 2. November 2006 (2006-11-02) * Zusammenfassung; Abbildung 1 * | 1-8 | |

-/--

Der vorliegende Recherchenbericht wurde für alle Patentansprüche erstellt

| Recherchenort | Abschlußdatum der Recherche | Prüfer |
|---|---|---|
| München | 3. April 2008 | Jansen, Helma |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

# EP 2 043 243 A1

**Europäisches Patentamt**

## EUROPÄISCHER RECHERCHENBERICHT

**Nummer der Anmeldung**

EP 07 11 7325

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 513 376 A (HAJEK GAYLER D) 19. Mai 1970 (1970-05-19) * das ganze Dokument * ----- | 1-5 | |
| Y | US 2006/028849 A1 (OGATA TAKASHIGE [JP] ET AL) 9. Februar 2006 (2006-02-09) * das ganze Dokument * ----- | 1-8 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 3. April 2008 | Jansen, Helma |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 11 7325

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-04-2008

| Im Recherchenbericht angeführtes Patentdokument | | Datum der Veröffentlichung | Mitglied(er) der Patentfamilie | | Datum der Veröffentlichung |
|---|---|---|---|---|---|
| DE 19538259 | A1 | 25-04-1996 | CN<br>US | 1132959 A<br>5610807 A | 09-10-1996<br>11-03-1997 |
| WO 2005122371 | A | 22-12-2005 | AU<br>CN<br>EP<br>JP<br>KR | 2005253207 A1<br>1965469 A<br>1754305 A2<br>2008502296 T<br>20070039030 A | 22-12-2005<br>16-05-2007<br>21-02-2007<br>24-01-2008<br>11-04-2007 |
| US 5761058 | A | 02-06-1998 | JP<br>JP | 3424398 B2<br>9047032 A | 07-07-2003<br>14-02-1997 |
| US 2006139021 | A1 | 29-06-2006 | CA<br>DE<br>EP<br>FR<br>WO | 2519074 A1<br>602004006098 T2<br>1604447 A1<br>2852748 A1<br>2004093305 A1 | 28-10-2004<br>03-01-2008<br>14-12-2005<br>24-09-2004<br>28-10-2004 |
| EP 1717938 | A | 02-11-2006 | CN<br>FR<br>JP<br>KR<br>US | 1848637 A<br>2884076 A1<br>2006288195 A<br>20060106878 A<br>2006220591 A1 | 18-10-2006<br>06-10-2006<br>19-10-2006<br>12-10-2006<br>05-10-2006 |
| US 3513376 | A | 19-05-1970 | FR | 1594807 A | 08-06-1970 |
| US 2006028849 | A1 | 09-02-2006 | CN<br>KR | 1728518 A<br>20060048837 A | 01-02-2006<br>18-05-2006 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- A new approach to reducing output ripple in switched -capacitor-based Stepp-down DC-DC-converters. *IEEE Transactions on Power Electronics,* November 2006, vol. 21 (6